# DEMANDE DE BREVET EUROPEEN

(11) **EP 0 660 291 A1**
(43) Date de publication de la demande: **28.06.1995**
(21) Numéro de dépôt: 94403008.9
(22) Date de dépôt: 23.12.1994
(51) Int. Cl.: G09B 9/05

(54) **Dispositif de simulation visuelle à parallaxe monoscopique pour un véhicule**

(30) Priorité: 23.12.1993 FR 9315548
(71) Demandeur: THOMSON-CSF, 75008 Paris (FR)
(72) Inventeur: Fontaine, Jean-Jacques, F-92402 Courbevoie Cedex (FR)
(74) Mandataire: Chaverneff, Vladimir

(57) **Abrégé**

Le dispositif de simulation de l'invention comporte : un écran de visualisation (7), un générateur d'images synthétiques (3), un calculateur (6) et une cabine de pilotage simulée (4). Selon l'invention, on munit l'utilisateur d'un dispositif de détection de position de sa tête, ce dispositif commandant le générateur d'images pour modifier la position des images par rapport au capot (8) du véhicule simulé.

## Description

La présente invention se rapporte à un dispositif de simulation visuelle à parallaxe monoscopique pour un véhicule.

Pour l'apprentissage de la conduite d'un véhicule, et en particulier pour les véhicules terrestres (voiture, camion, char, engin de levage, ...) un des éléments fondamentaux est la représentation visuelle de la partie avant du véhicule (capot de la voiture, glacis du char, ...) qui sert de référence pour l'apprentissage du gabarit, et qui, par analyse des positions relatives des autres véhicules, du paysage et du capot, permet une évaluation des distances et des vitesses. En particulier, en approchant d'un obstacle l'observateur bouge la tête, ce qui lui permet, par évaluation des déplacements relatifs de l'obstacle par rapport à son capot, d'évaluer les distances, et ce sans utiliser la stéréoscopie. C'est ce qu'on appelle la parallaxe monoscopique.

Usuellement, dans un simulateur, le système visuel étant proche de l'observateur, la partie avant du véhicule est calculée par le générateur d'images et présentée à l'observateur en étant superposée au paysage.

Cette méthode présente l'inconvénient majeur de représenter le capot du véhicule dans une position fixe par rapport à l'observateur. Dans la réalité, lorsque l'observateur bouge la tête à l'intérieur du véhicule, il y a un mouvement relatif du paysage par rapport au capot.

La présente invention a pour objet un dispositif de simulation visuelle permettant la mise en oeuvre de ladite parallaxe monoscopique, et ce, de façon simple et la moins onéreuse possible.

Le dispositif conforme à l'invention, du type comportant une cabine de conduite simulée, un générateur d'images synthétiques, un calculateur de commande et de contrôle des éléments du dispositif de simulation, et un dispositif de présentation d'images, est caractérisé par le fait qu'il comporte un détecteur de position de la tête de l'utilisateur, coopérant avec le calculateur pour commander le générateur d'images et modifier la position des images par rapport au véhicule simulé lorsque la positon de la tête de l'observateur varie.

La présente invention sera mieux comprise à la lecture de la description détaillée d'un mode de réalisation pris à titre d'exemple non limitatif et illustré par le dessin annexé, sur lequel :
- la figure 1 est un bloc-diagramme d'un dispositif de simulation conforme à l'invention, et
- les figures 2 et 3 sont des vues simplifiées d'exemples d'images affichées par le dispositif de la figure 1, pour deux positions différentes de la tête de l'utilisateur.

L'invention est décrite ci-dessous en référence à un simulateur de voiture automobile, mais il est bien entendu qu'elle n'est pas limitée à un tel genre de véhicules, et qu'elle peut être mise en oeuvre pour divers autres véhicules, tels que des camions, des chars, des engins de travaux publics, etc.

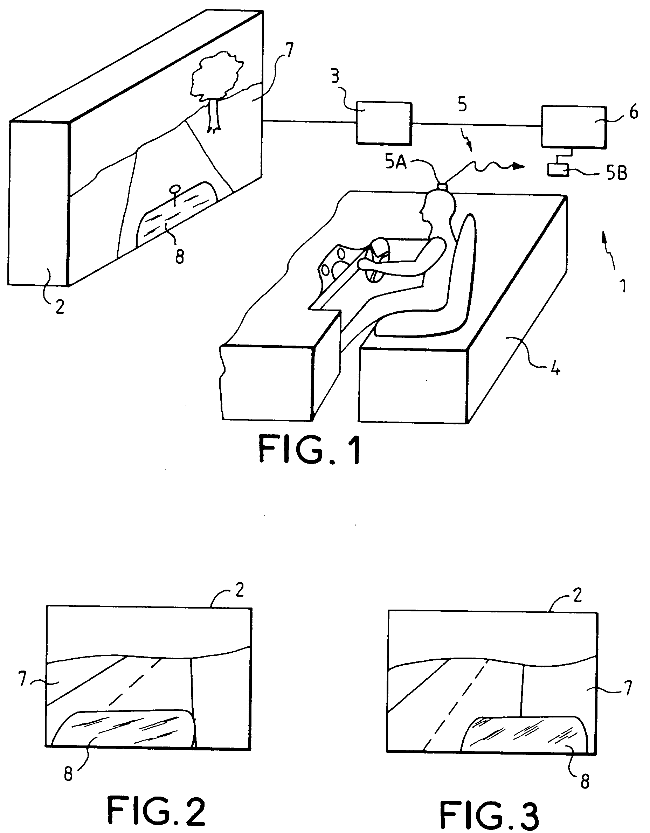

Le dispositif 1 de simulation visuelle représenté en figure 1 comprend essentiellement : un dispositif 2 de présentation d'images, un générateur 3 d'images de synthèse, une cabine de véhicule simulée 4 dans laquelle prend place l'utilisateur, un détecteur 5 de position de la tête de l'utilisateur, et un calculateur 6.

Le dispositif 2 de présentation d'images peut être un moniteur à tube cathodique, un dispositif d'affichage à cristaux liquides, un rétroprojecteur ou un projecteur associé à un écran de projection. La surface de visualisation de ce dispositif 2 est avantageusement disposée près de l'observateur, par exemple à une distance inférieure à 5 m, de façon à rendre la visualisation la plus réaliste possible.

Le générateur 3 calcule les images à afficher en fonction de la position de l'oeil de l'utilisateur, cette position étant déterminée à partir des données fournies par le détecteur 5.

La cabine 4 peut être une cabine complète (c'est-à-dire la copie conforme d'une cabine réelle avec tous ses éléments tels que toit, pare-brise, montants, rétroviseurs ...) ou bien une cabine simplifiée (avec seulement des sièges et les commandes).

La partie mobile 5A du détecteur 5 est fixée sur la tête de l'utilisateur, par exemple à l'aide d'un serre-tête. Ce détecteur 5 peut être de tout type approprié électromagnétique ou optique, et peut être associé à un oculomètre. La partie mobile 5A du détecteur 5 coopère avec une partie fixe 5B reliée au calculateur 6. La partie fixe 5B fournit au calculateur les coordonnées géographiques de la partie 5A et son orientation (en site, gisement et, avantageusement en roulis, c'est-à-dire en rotation autour de l'axe du regard de l'observateur). La réalisation d'un tel détecteur est bien connue en soi et ne sera pas décrite plus en détail.

Le générateur 3 calcule, sous la commande du calculateur 6, les images à visualiser par le dispositif 2 de façon qu'elles correspondent à la position (et éventuellement à l'orientation) de l'oeil de l'utilisateur. Le fonctionnement du calculateur 6 et du générateur 3 étant bien connu en soi, ne sera pas décrit ici.

Le fonctionnement du dispositif 1 est le suivant.

Lorsque l'utilisateur s'installe dans la cabine 4, le détecteur 5 détermine la position et l'orientation initiales de sa tête (et donc de son oeil avec une bonne approximation), et envoie les données correspondantes au générateur 3 via le calculateur 6. Le générateur 3 calcule l'image à visualiser par le dispositif 2. Cette image comprend à la fois le paysage 7 et au moins un élément du véhicule simulé, avantageusement le capot 8 du véhicule simulé (figure 2). Cette image est donc calculée à partir de la position réelle de l'observateur par rapport au véhicule simulé, et elle tient compte de tous les paramètres relatifs au point de vue de l'observateur : position du siège, taille de l'observateur, position de l'observateur sur son siège.

Lorsque l'observateur bouge le corps et/ou la tête (et, le cas échéant les yeux), l'image à afficher par le dispositif 2 est automatiquement recalculée par le générateur 3, sous la commande du calculateur 6, à partir des données fournies par le détecteur 5. Cette nouvelle image (Figure 3) tient compte des positions relatives des objets, et en particulier du paysage 7A et des véhicules éventuellement visibles, par rapport au capot 8. L'utilisateur peut donc, comme dans la réalité, utiliser les mouvements relatifs du paysage par rapport à son capot (effet de parallaxe) pour évaluer sa distance par rapport à des véhicules proches, et sa vitesse.

## Revendications

1. Dispositif de simulation visuelle à parallaxe monoscopique pour un véhicule, dispositif du type comportant une cabine de conduite simulée (4), un générateur d'images synthétiques (3), un calculateur (6) de commande et de contrôle des éléments du dispositif de simulation, et un dispositif de présentation d'images (2), caractérisé par le fait qu'il comporte un détecteur (5) de position de la tête de l'utilisateur coopérant avec le calculateur pour commander le générateur d'images et modifier la position des images par rapport au véhicule simulé lorsque la position de la tête de l'observateur varie.

2. Dispositif selon la revendication 1, caractérisé par le fait que les images synthétiques comportent le paysage extérieur (7) et au moins un élément du véhicule simulé (8).

3. Dispositif selon la revendication 2, caractérisé par le fait que l'élément du véhicule simulé est son capot (8).

4. Dispositif selon l'une des revendications 1 à 3, caractérisé par le fait que le dispositif détecteur de position de tête est électromagnétique.

5. Dispositif selon l'une des revendications 1 à 3, caractérisé par le fait que le dispositif détecteur de position de tête est optique.

6. Dispositif selon l'une des revendications précédentes, caractérisé par le fait que le dispositif de présentation d'images est un moniteur à tube cathodique.

7. Dispositif selon l'une des revendications 1 à 5, caractérisé par le fait que le dispositif de présentation d'images est un dispositif d'affichage à cristaux liquides.

8. Dispositif selon l'une des revendications 1 à 5, caractérisé par le fait que le dispositif de présentation d'images est un rétroprojecteur associé à un écran de projection.

9. Dispositif selon l'une des revendications 1 à 5, caractérisé par le fait que le dispositif de présentation d'images est un projecteur associé à un écran de projection.

10. Dispositif selon l'une des revendications précédentes, caractérisé par le fait que le détecteur de position de la tête de l'utilisation est associé à un oculomètre.
